# EUROPEAN PATENT SPECIFICATION

(11) **EP 1 740 119 B1**
(45) Date of publication and mention of the grant of the patent: **26.06.2019**
(21) Application number: 05725051.6
(22) Date of filing: 08.03.2005
(51) Int. Cl.: A61C 5/66, B05C 17/005

(54) **ENERGY ASSISTED DELIVERY OF DENTAL MATERIALS FROM A CARTRIDGE**
ENERGIEUNTERSTÜTZTE ABGABE VON DENTALMATERIALIEN AUS EINER KARTUSCHE
DISTRIBUTION D'ENERGIE ASSISTEE DE MATERIAUX DENTAIRES A PARTIR D'UNE CARTOUCHE

(30) Priority: 08.03.2004 US 551282 P
(43) Date of publication of application: 10.01.2007
(73) Proprietor: DENTSPLY SIRONA Inc., York, PA 17401-2991 (US)
(72) Inventor: PIERSON, Paul, R., Camden, DE 19934 (US)
(74) Representative: Hartz, Nikolai
(86) International application number: PCT/US2005/007668
(87) International publication number: WO 2005/087129

(56) References cited:
- WO-A-01/17454
- WO-A-2004/071326
- WO-A-2004/082508
- US-A- 4 704 088
- US-A1- 2002 058 231

## Description

### TECHNICAL FIELD

The present invention generally relates to the delivery of dental materials. More particularly, the invention relates to the delivery of dental materials from a cartridge or ampoule. Specifically the invention relates to such a device wherein the dispensing of the dental material from the cartridge is assisted with applied energy.

### BACKGROUND OF THE INVENTION

In the art of dispensing cartridges it is common practice at present, for example, to provide the dental profession with such devices which are pre-loaded with cements, filling material, restoratives, adhesives, bonding agents, composites, and the like. Often such devices take the form of an ampoule or cartridge, which is inserted into a handheld delivery gun or the like having operating handles or levers and, by operation thereof, desired amounts of the material in the cartridges are discharged readily and precisely. It is often the case in dentistry that relatively small quantities of such materials are used in a given application. Therefore, such materials are often packed in one-time use cartridges in approximately single use amounts or "unit doses."

One example of a cartridge of interest to the present invention comprises the subject matter of prior U.S. Pat. No. 4,391,590 to Dougherty, dated July 5, 1983, and assigned to the assignee of the present invention. In the patented structure, the body of the cartridge is cylindrical and of uniform inner diameter and in which a discharge piston is mounted in position in the open filling end of the cartridge to form both a closure and an ejecting piston. Cartridges of this type are miniature and, by way of example, have an outer diameter of about 6.4 mm (1/4 inch) and an inner diameter of approximately 3.2 mm (1/8 inch). The piston, accordingly, has a complementary outer diameter of about 3.2 mm (1/8 inch) and at present is composed of solid plastic material. An example of a cartridge heretofore known in the art is sold by DENTSPLY International Inc. of York, PA, under the registered trademark COMPULES.

US 4,704,088 discloses a cartridge for storing and dispensing a dental material according to the preamble of claim 1 of the present invention.

While such cartridges have enjoyed widespread use, there is always a difficulty in dispensing highly filled and highly viscous dental materials. A need exists therefore for a cartridge that has all of the ease of use characteristics of those heretofore known, but which can be used to more easily dispense highly viscous materials.

### SUMMARY OF THE INVENTION

According to one embodiment of the invention, a cartridge of the type having a reservoir body and a fluidly connected dispensing nozzle and a piston within the body, wherein the material to be dispensed is preloaded in the body between the dispensing nozzle and the piston, is improved by having a heating element wrapped or otherwise positioned around at least a portion of the body. The heating element imparts heat energy. The application of such energy causes the dental material to soften allowing it to be more easily moved by the piston toward and out of the dispensing nozzle. In another embodiment of the invention, the heating element is embedded within the body during its formation. The heating element may be for example, a wire, a tube, a mesh or the like.

In an example not forming part of the invention, a cartridge wherein the body is formed from a plastic material has metallic particles embedded therein. In this example the energy delivery device induces a magnetic flux proximate to the body. The embedded particles are thereby heated and in turn impart thermal energy to the dental material to be dispensed. The application of such energy causes the dental material to soften allowing it to be more easily moved by the piston toward and out of the dispensing nozzle.

A delivery device comprises means to removably accept such a cartridge and to have exert a force upon the piston. The delivery device also has suitable connectors, electrical, air pressured or other to facilitate the operation of providing energy to the cartridge. In one example, electrical contacts are provided to mate with electrical contacts associated with the cartridge to provide electricity thereto. In another example the delivery device also imparts sonic or ultrasonic energy to the cartridge or alternatively or in addition thereto, a condenser element.

### BRIEF DESCRIPTION OF THE DRAWINGS

Fig. 1 is a side plan view of a cartridge according to the present invention, and showing a wire embedded in a body, the body being shown transparent and partially broken away.
Fig. 2 is an alternative example of a cartridge.
Fig. 3 is another alternative example of a cartridge.
Fig. 4 is a close-up, perspective view of one portion of a cartridge according to the present invention.
Fig. 5 is a delivery device useful for example, in accepting and employing a cartridge as in Figs. 1-4.

### PREFERRED EMBODIMENTS FOR CARRYING OUT THE INVENTION

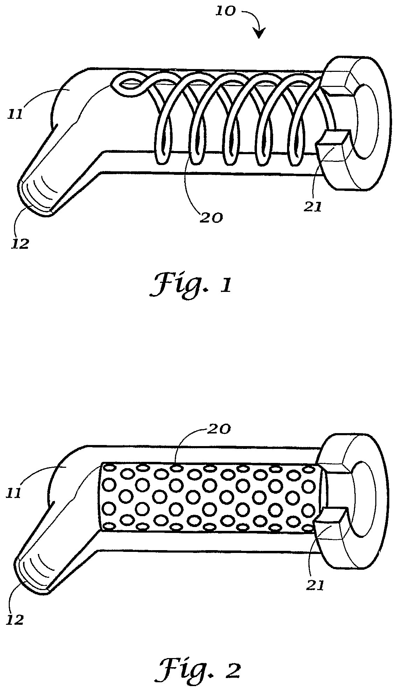

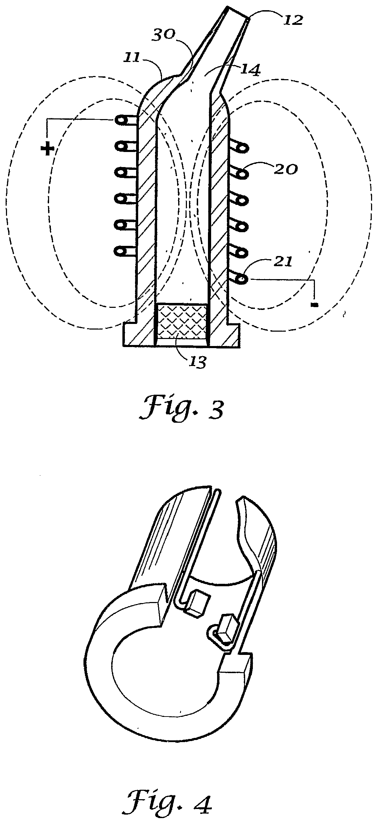

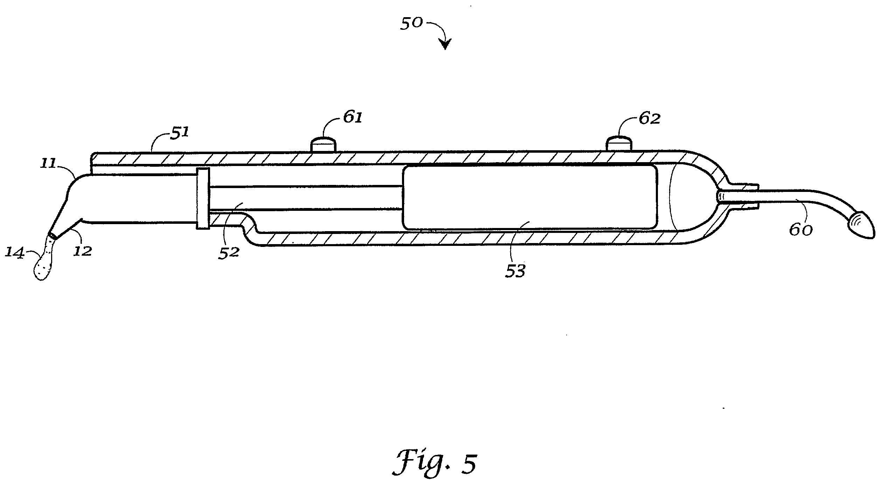

As shown in Fig. 1, according to one embodiment of the invention, a cartridge 10 of the type having a reservoir body 11 and a fluidly connected dispensing nozzle 12 and a piston 13 (Fig. 3) within the body 10 is preloaded with a dental material 14 to be dispensed (Fig. 3) in the body 11 between the dispensing nozzle 12 and the piston 13. A heating element 20 is wrapped or otherwise positioned around, and embedded within at least a portion of the body 11, and is provided with electrical contacts 21. Electrical contacts 21 can electrically contact an electrical supply in a delivery device (Fig. 5) or in a remote supply unit (not shown). The heating element imparts heat energy. The application of such energy causes the dental material 14 to soften allowing it to be more easily moved by the piston 13 toward and out of the dispensing nozzle 12. In another embodiment of the invention, the heating element (20) is embedded within the body during its formation, which is preferably formed from a suitable plastic material. The heating element may be for example, a wire (Fig. 1), a tube (Fig. 2), a mesh (Fig. 2) or the like.

In an example not forming part of the invention, the body 11 is formed from a plastic material having metallic particles 30 embedded therein. Metal particles 30 may be any metal responsive to a magnetic flux. In this embodiment, the energy delivery device 20 induces a magnetic flux 40 proximate to the body 11. The embedded particles 30 are thereby heated and in turn impart thermal energy to the dental material 14 to be dispensed. The application of such energy causes the dental material 14 to soften allowing it to be more easily moved by the piston 13 toward and out of the dispensing nozzle 14.

Electrical contacts 21 are shown more clearly in Fig. 4, and may be in turn connected to any of the energy delivery elements 20.

A delivery device 50 (Fig. 5) comprises means 51 to removably accept such a cartridge 10 and to have exert a force upon the piston 13, such as by use of movable rod 52. The delivery device also has suitable connectors (not shown) that provide electrical, air pressured or other energy to facilitate the operation of providing energy to the cartridge 10. In one example delivery device 50 has an internal battery 53 to provide the energy supply. Battery 53 is electrically connected to contacts 21 in any conventional manner.

Disclosed herein is a delivery device having a condenser element 60 which is caused to vibrate by sonic or ultrasonic energy delivered by delivery device 50. Actuating button 61 may be provided to operate movable rod 52 and/or energy delivery device or element 20. Similarly, button actuator 62 may be provided to impart energy to condenser element 60. Otherwise, condenser element 60 is a conventional dental condenser.

## Claims

1. A cartridge (10) for storing and dispensing a dental material (14), the cartridge (10) being of the type having a reservoir body (11) and a fluidly connected dispensing nozzle (12) and a piston (13) within the body (11), wherein the dental material (14) to be dispensed is preloaded in the body (11) between the dispensing nozzle (12) and the piston (13), the improvement comprising a heating element (20) wrapped or otherwise positioned around at least a portion of the body (11), the heating element (20) imparting heat energy, said heating element (20) is provided with electrical contacts (21) and is of the type such having a resistance such that when an electrical current is passed therethrough, said heating element (20) produces heat, **characterised in that** the heating element (20) is embedded within at least a portion of the cartridge body (11).

2. A cartridge (10) as in claim 1, wherein the heating element (20) is a wire, a tube or a mesh shape.

## Patentansprüche

1. Patrone (10) zum Speichern und Abgeben eines Dentalmaterials (14), wobei die Patrone (10) von der Art ist, die einen Behälterkörper (11) und eine fluidisch verbundene Abgabedüse (12) und einen Kolben (13) innerhalb des Körpers (11) aufweist, wobei das abzugebende Dentalmaterial (14) in dem Körper (11) zwischen der Abgabedüse (12) und dem Kolben (13) vorgeladen ist und die Verbesserung ein Heizelement (20) umfasst, das um mindestens einen Abschnitt des Körpers (11) gehüllt oder anderweitig darum herum positioniert ist, wobei das Heizelement (20) Wärmeenergie verleiht und das Heizelement (20) mit elektrischen Kontakten (21) versehen ist und von der Art ist, die einen Widerstand aufweist, sodass, wenn ein elektrischer Strom hindurchgeleitet wird, das Heizelement (20) Wärme erzeugt, **dadurch gekennzeichnet, dass** das Heizelement (20) innerhalb mindestens eines Abschnitts des Patronenkörpers (11) eingebettet ist.

2. Patrone (10) nach Anspruch 1, wobei das Heizelement (20) eine Draht-, Rohr- oder Netzform ist.

## Revendications

1. Cartouche (10) destinée au stockage et à la distribution d'un matériau dentaire (14), la cartouche (10) étant du type disposant d'un corps de réservoir (11) et une buse de distribution (12) reliée par fluide à un piston (13) dans le corps (11), dans laquelle le matériau dentaire (14) à distribuer est préchargé dans le corps (11) entre la buse de distribution (12) et le piston (13), le perfectionnement comprenant un élément de chauffage (20) enveloppé ou autrement placé autour d'au moins une partie du corps (11), l'élément de chauffage (20) transmettant de l'énergie thermique, ledit élément de chauffage (20) est muni de contacts électriques (21) et est du type ayant une résistance si bien que lorsqu'un courant électrique le traverse, ledit élément de chauffage (20) produit de la chaleur, **caractérisé en ce que** l'élément de chauffage (20) est intégré dans au moins une partie du corps de cartouche (11).

2. Cartouche (10) selon la revendication 1, dans laquelle l'élément de chauffage (20) est un fil, un tube ou une forme de maille.
